# EUROPEAN PATENT SPECIFICATION

(11) **EP 3 083 218 B1**
(45) Date of publication and mention of the grant of the patent: **06.09.2017**
(21) Application number: 14833230.7
(22) Date of filing: 18.12.2014
(51) Int. Cl.: B29D 30/00, F16P 3/08

(54) **A METHOD FOR MANAGING AT LEAST ONE ADJUSTMENT OPERATION ON AN APPARATUS FOR BUILDING TYRES**
VERFAHREN ZUR VERWALTUNG MINDESTENS EINER EINSTELLUNGSOPERATION AUF EINER VORRICHTUNG ZUR HERSTELLUNG VON REIFEN
PROCÉDÉ DE GESTION D'AU MOINS UNE OPÉRATION DE RÉGLAGE SUR UN APPAREIL POUR LA FABRICATION DE PNEUS

(30) Priority: 20.12.2013 IT MI20132168
(43) Date of publication of application: 26.10.2016
(73) Proprietor: Pirelli Tyre S.p.A., 20126 Milano (IT)
(72) Inventor: BOSCAINO, Ivan Gildo, I-20126 Milano (IT); PIANTANIDA, Pier Giuseppe, I-20126 Milano (IT); SANGIOVANNI, Stefano, I-20126 Milano (IT)
(74) Representative: Vittorangeli, Lucia
(86) International application number: PCT/IB2014/067075
(87) International publication number: WO 2015/097602

(56) References cited:
- EP-A1- 2 369 220
- GB-A- 619 081
- GB-A- 2 261 714

## Description

The object of the present invention is a method for managing at least one adjustment operation on an apparatus for building tyres.

Another object of the present invention is a process and a work station implementing such method.

With the term "safety enclosure" it is intended the perimeter of an area with controlled access delimited for example by a fence provided with access door or by passage detection sensors.

With the term "opening" of the safety enclosure, or analogous terms, it is intended the possibility to access the reserved area or a breach of the reserved area. In the case of the fence provided with access door, the opening of the safety enclosure occurs by means of opening of the access door. In the case of area provided with detection sensors, the opening occurs following the deactivation of such sensors or following a breach of the reserved area, detected by the sensors themselves.

With the term "closure" of the safety enclosure, or analogous terms, it is intended the impossibility of accessing the reserved area or the lack of breach of the reserved area. In the case of the fence provided with access door, the closure of the safety enclosure occurs by means of closure of the access door. In the case of area provided with detection sensors, the closure occurs following the activation of such sensors.

With the term "pneumatic actuator", it is intended an element driven by compressed air, suitable for moving devices of the building apparatus. A pneumatic piston, in particular double-acting, is an example of a pneumatic actuator.

With the term "building operation", it is intended any one operation that concludes with the attainment of a structural component of the tyre or of a part thereof, or which is a processing step of the tyre itself, including the vulcanisation of the green tyre.

With the term "work station" it is intended an apparatus for building a tyre suitable for obtaining or processing a structural component of the tyre or a part thereof within a safety enclosure forming an integral part of the work station. A work station is for example a station comprising at least one tyre vulcanisation mould.

With the term "adjustment operation" it is intended a verification of correct positioning (e.g. a centring) and/or correct functioning of devices of a building apparatus, during apparatus initialisation e.g. following a size change, during ordinary periodic controls, and during extraordinary controls e.g. following an indication of a defect shown on the tyre being processed or on the finished tyre.

With the term "safety distance" it is intended a distance greater than the range of action of a device belonging to the building apparatus.

The Applicant has observed that the known building apparatuses, operating by means of pneumatic actuators, are subjected to vibrations and impact that over time negatively affect the calibrations of the devices of the building apparatus, requiring periodic controls for reestablishing centring and adjustments in order to prevent defects on the tyres themselves.

In particular the Applicant has observed that in order to adjust the known building apparatuses, respecting the narrow tolerance margins and operating in safety conditions, i.e. in conditions of deactivation of the apparatus itself or rather the electrical power supply and the pneumatic supply, long processing times are required and hence long stop times of the building apparatus itself.

The Applicant has also observed that a manual adjustment of the pneumatic actuators, in the absence of activation of the pneumatic supply, does not allow maintaining the desired position or adjustment if not after a long series of attempts, in which it is necessary to also consider the instability problems of the devices during reactivation of the pneumatic supply. For example, a method for managing at least an adjustment operation on an apparatus according to the preamble of claim 1 is known from GB 2 261 714 A. In such aim, the Applicant perceived the need to simplify the adjustment of building apparatuses operating with pneumatic actuators in order to limit the stopping time of the apparatus itself and improve the productivity thereof, while ensuring the required tolerances of the building process.

In particular, the Applicant perceived the need to ensure the safety of the operators set to conduct adjustment operations while allowing a precise reactivation of the apparatus after having fulfilled the ordinary and extraordinary adjustment requirements of the apparatus itself.

In this perspective, the Applicant perceived that the adjustment of the apparatus can be facilitated and made quicker by maintaining the pressure inside the pneumatic actuators in conditions such to not constitute a risk for operators.

The Applicant has finally found that it is possible to execute at least one operation of adjustment of an apparatus belonging to a work station, in open safety enclosure conditions, ensuring the safety of the operators by means of activation of an auxiliary pneumatic supply of the pneumatic actuators to be adjusted.

More specifically, according to a first aspect, the present invention relates to a method for managing at least one adjustment operation on an apparatus for building a tyre, said apparatus being arranged within a safety enclosure and comprising at least one pneumatic actuator.

Preferably said method comprises executing at least one building operation in closed safety enclosure conditions comprising activating at least one primary pneumatic supply of said pneumatic actuator and driving said at least one pneumatic actuator by selecting a corresponding connection with said primary pneumatic supply.

Preferably said method comprises executing at least one adjustment operation of said apparatus in open safety enclosure conditions comprising activating an auxiliary pneumatic supply of said pneumatic actuator.

Preferably the closure of the safety enclosure is the condition required for being able to activate said primary pneumatic supply.

Preferably the opening of the safety enclosure corresponds with an automatic command for the deactivation of said primary pneumatic supply.

The Applicant deems that by maintaining the pressure inside the pneumatic actuators due to the activation of an auxiliary pneumatic supply, it is possible to easily execute an adjustment operation in open safety enclosure conditions, ensuring the safety of the operators. According to a further aspect, the present invention relates to a process for performing at least one adjustment operation on an apparatus for building tyres, said apparatus being arranged within a safety enclosure and comprising at least one pneumatic actuator. Preferably said process comprises closing said safety enclosure in a manner so as to enable the activation of a primary pneumatic supply of said pneumatic actuator. Preferably said process comprises executing at least one building operation of said tyre in closed safety enclosure conditions by driving said at least one pneumatic actuator by means of selection of a corresponding connection with said primary pneumatic supply.

Preferably said process comprises opening said safety enclosure, automatically deactivating said primary pneumatic supply.

Preferably said process comprises activating an auxiliary pneumatic supply of said pneumatic actuator. Preferably said process comprises driving said pneumatic actuator by selecting a corresponding connection with said auxiliary pneumatic supply.

Preferably said process comprises executing in open safety enclosure conditions said at least one adjustment operation on said apparatus.

Preferably said process comprises deactivating said auxiliary pneumatic supply of said pneumatic actuator. According to a still further aspect, the present invention relates to a work station comprising a safety enclosure and an apparatus for building a tyre arranged within said safety enclosure and comprising at least one pneumatic actuator.

Preferably the apparatus for building a tyre comprises a primary pneumatic supply of said pneumatic actuator that can be activated for executing at least the building of a portion of a tyre in closed safety enclosure conditions.

Preferably the apparatus for building a tyre comprises an auxiliary pneumatic supply of said pneumatic actuators suitable for executing an adjustment operation in open safety enclosure conditions.

Preferably the apparatus for building a tyre comprises a main pneumatic selector operatively associated with said safety enclosure, adjustable for activating/deactivating said auxiliary pneumatic supply respectively with safety enclosure open and with safety enclosure closed.

The present invention, in at least one of the aforesaid aspects, can also have one or more of the preferred characteristics described hereinbelow.

Preferably, executing at least one adjustment operation of said apparatus in open safety enclosure conditions comprises selectively driving a group of pneumatic actuators by means of a corresponding connection with said auxiliary pneumatic supply, said apparatus comprising at least two groups of pneumatic actuators, each comprising at least one pneumatic actuator.

The Applicant deems that in the case of two or more groups of pneumatic actuators, the selective adjustment of a group improves the safety conditions of the operator and the quality of the adjustment, since the auxiliary pneumatic supply is driven for one group at a time.

Preferably activating said auxiliary pneumatic supply comprises the activation of an automatic command that prevents the execution of said at least one building operation in case of closure of the safety enclosure. The Applicant deems that the use of an automatic command for preventing building following the activation of the auxiliary pneumatic supply ensures an optimal level of safety for the operator in case of accidental closure of the safety enclosure.

Preferably provision is made for detecting the pressure of said auxiliary pneumatic supply in order to generate said automatic command that prevents the execution of said at least one building operation in closed safety enclosure conditions upon attaining a specific upper threshold value.

The Applicant deems that the direct and automatic detection of the pressure of the auxiliary pneumatic supply is capable of providing an automatic command in brief time periods and without interfering with the correct operation of the apparatus during adjustment. Preferably, activating said auxiliary pneumatic supply comprises by-passing said primary pneumatic supply with said auxiliary pneumatic supply in the inlet and/or in the outlet of each pneumatic actuator or group of pneumatic actuators.

The Applicant deems that a by-pass between the primary pneumatic supply and the auxiliary pneumatic supply allows simplifying the apparatus, making possible the use of standard pneumatic actuators during design phase or re-adapting apparatuses already in use, making them safer and more reliable during adjustment phase. Preferably by-passing said primary pneumatic supply with said auxiliary pneumatic supply is achieved downstream of a selection of the corresponding connection of the pneumatic actuator with said auxiliary pneumatic supply. The Applicant deems that such configuration allows maintaining a remote control of the selection of the pneumatic actuator to be adjusted, in a manner so as to further increase the safety of the operator.

Preferably provision is made for deactivating said auxiliary pneumatic supply at the end of the adjustment operation.

Preferably deactivating said auxiliary pneumatic supply comprises the activation of an automatic command which enables the execution of said at least one building operation in closed safety enclosure conditions.

The Applicant deems that the use of an automatic command for enabling the building allows a quick and reliable management of the passage between the execution of the adjustment operation and the execution of the building operation.

Preferably provision is made for detecting the pressure of said auxiliary pneumatic supply in order to generate said automatic command which enables the execution of said at least one building operation in closed safety enclosure conditions upon attaining a specific lower threshold value.

The Applicant deems that the direct and automatic detection of the pressure of the auxiliary pneumatic supply is capable of providing an automatic command in brief time periods and without interfering with the correct operation of the apparatus during building. Preferably deactivating said auxiliary pneumatic supply comprises by-passing said auxiliary pneumatic supply with said primary pneumatic supply in the inlet and/or in the outlet of each pneumatic actuator or group of pneumatic actuators.

Preferably, by-passing said auxiliary pneumatic supply with said primary pneumatic supply is achieved downstream of a selection of the corresponding connection of the pneumatic actuator with said primary pneumatic supply.

Preferably the opening of the safety enclosure is the condition for activating said auxiliary pneumatic supply.

Preferably the pressure in the auxiliary pneumatic supply has a value greater than or equal to about 3 bar. Preferably the pressure in the auxiliary pneumatic supply has a value less than or equal to about 7 bar. Preferably the pressure in the primary pneumatic supply has a value greater than or equal to about 7.

Preferably the pressure in the auxiliary pneumatic supply has a value less than or equal to about bar and about 8 bar.

Preferably provision is made for reducing the pressure of said auxiliary pneumatic supply with respect to said primary pneumatic supply.

The Applicant deems that such reduction allows ensuring the maximum stroke of the pneumatic actuator while making it ineffective in case of impact against the operator.

Preferably provision is made for reducing the pressure of said auxiliary pneumatic supply to about 3 bar.

The Applicant deems that such value of the pressure is optimal for allowing a safe, effective and reliable adjustment.

Preferably provision is made for reducing the flow rate of said auxiliary pneumatic supply with respect to said primary pneumatic supply.

The Applicant deems that such reduction allows further increasing the safety of the operator, ensuring a fluid but slow movement, without impact, of the pneumatic actuator.

Preferably said adjustment operation comprises an operation for verifying or centring at least one device of said apparatus driven by a pneumatic actuator. Preferably provision is made for detecting and signalling a defect of said tyre and performing said adjustment operation as a function of the indicated defect.

The Applicant deems that a reliable and quick adjustment operation allows improving the quality of the finished product, operating as a part of a feedback process. Preferably said building operation comprises vulcanising a green tyre.

Preferably said adjustment operation comprises an operation of centring and/or concentricity of a loader device of a vulcanisation mould with respect to said vulcanisation mould.

Preferably said adjustment operation comprises an operation of centring and/or concentricity of an unloader device of a vulcanisation mould with respect to said vulcanisation mould.

Preferably said adjustment operation comprises an operation for verifying the pressure exerted by grip members of a loader device and/or of an unloader device of a vulcanisation mould.

Preferably, executing at least one adjustment operation of said apparatus in open safety enclosure conditions comprises manually activating an auxiliary pneumatic supply of said pneumatic actuator.

Preferably, executing at least one building operation in closed safety enclosure conditions comprises activating at least one electrical power supply, in which the closure of the safety enclosure is the condition required for being able to activate said electrical power supply.

Preferably the opening of the safety enclosure corresponds with an automatic command for the deactivation of said electrical power supply.

Preferably provision is made for selectively driving a group of pneumatic actuators by selecting a corresponding connection with said auxiliary pneumatic supply, said apparatus comprising at least two groups of pneumatic actuators, each comprising at least one pneumatic actuator.

Preferably, selectively driving a group of pneumatic actuators by selecting a corresponding connection with said auxiliary pneumatic supply comprises modifying the position of an operative pneumatic selector.

Preferably, activating/deactivating said auxiliary pneumatic supply of said pneumatic actuators comprises modifying the position of a main pneumatic selector. Preferably provision is made for modifying the position of a secondary pneumatic selector in order to select between said primary pneumatic supply and said auxiliary pneumatic supply in the inlet and/or outlet of said pneumatic actuator.

Preferably provision is made for modifying the position of a secondary pneumatic selector in order to select between said primary pneumatic supply and said auxiliary pneumatic supply in the inlet and/or outlet of said pneumatic actuator as a function of the position of a main pneumatic selector.

Preferably at least two groups of pneumatic actuators are provided, each comprising at least one pneumatic actuator, and an operative pneumatic selector is provided for each group of pneumatic actuators, said operative pneumatic selector being adjustable for selecting a corresponding connection with said auxiliary pneumatic supply.

Preferably a secondary pneumatic selector is provided for each inlet and/or outlet of the pneumatic actuator or group of pneumatic actuators, for alternately selecting between said primary pneumatic supply and said auxiliary pneumatic supply in the inlet and/or outlet of said pneumatic actuator.

Preferably each secondary pneumatic selector is operatively connected to said main pneumatic selector. Preferably each secondary pneumatic selector is arranged downstream of the respective operative pneumatic selector.

Preferably piping of said auxiliary pneumatic supply arranged between said operative pneumatic selector and said secondary pneumatic selector has a smaller diameter than piping provided in the primary pneumatic supply. Preferably the piping 12 has a diameter greater than or equal to about 4 mm.

Preferably the piping 12 has a diameter less than or equal to about 6 mm.

Preferably the piping 13 has a diameter greater than or equal to about 6 mm.

Preferably the piping 13 has a diameter less than or equal to about 12 mm.

Preferably said auxiliary pneumatic supply comprises a flow adjuster adapted for decreasing the pressure in the auxiliary pneumatic supply with respect to the pressure in the primary pneumatic supply.

Preferably said auxiliary pneumatic supply comprises a manostat for detecting the pressure inside the auxiliary pneumatic supply.

Preferably a command box is provided, containing said main pneumatic selector and said operative pneumatic selector, said command box being arranged within the safety enclosure.

The Applicant deems that inserting the command box within the safety enclosure increases the safety of the operator, since the activation of the auxiliary pneumatic supply depends on the opening of the safety enclosure and hence on the deactivation of the electrical power supply and the primary pneumatic supply.

Preferably at least one device is provided that is movable due to the action of at least one pneumatic actuator and said command box is arranged at a safety distance from said device.

Preferably a main pneumatic selector is provided that is manually adjustable for activating/deactivating said auxiliary pneumatic supply.

Further characteristics and advantages of the invention will be clear from the following description of several embodiments of methods, processes and apparatuses according to the invention, made as a non-limiting example with reference to the enclosed figures in which:

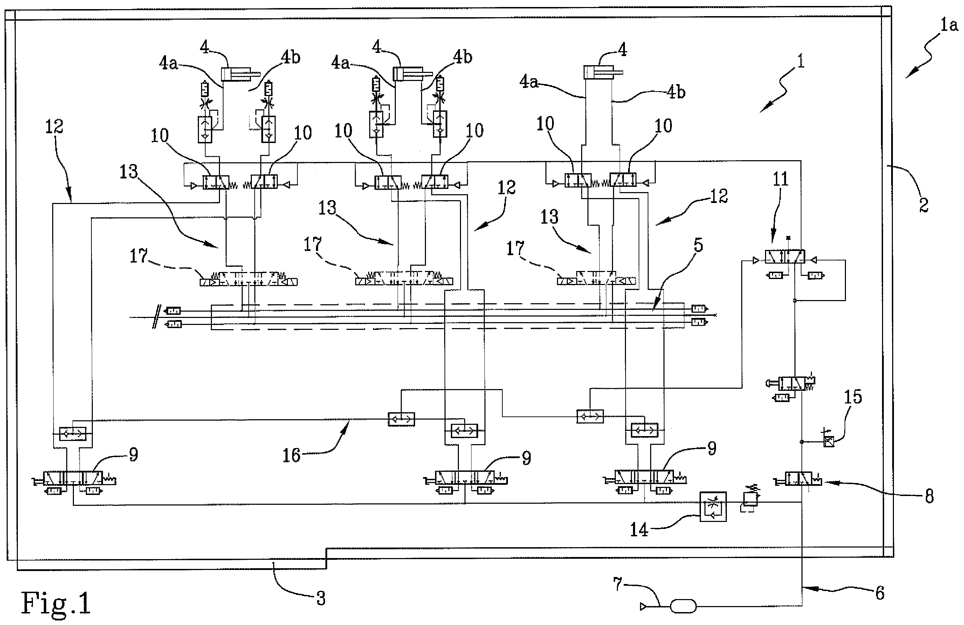

Figure 1 shows a partial scheme of a work station according to the present invention.

With reference to figure 1, reference number 1a overall indicates a work station comprising an apparatus 1 for building a tyre and a safety enclosure. The apparatus 1 is arranged within the safety enclosure 2. In the case illustrated in the enclosed figure, the safety enclosure 2 is obtained by means of a fence adapted to separate the apparatus 1 from the environment and comprises an door 3 for accessing the safety enclosure which, in the enclosed figure, is illustrated in closed position. Alternatively, the safety enclosure 2 is obtained in an area having passage detection sensors.

The apparatus 1 can comprise at least one pneumatic actuator, e.g. a pneumatic cylinder, comprising a piston associated with a stem slidably engaged in a chamber provided with inlet and outlet. According to the illustrated embodiment, the apparatus 1 comprises three pneumatic actuators 4. In particular, the illustrated embodiment and the following description provide for the use of double-acting pneumatic actuators 4 provided with functionally interchangeable inlet 4a and outlet 4b. Each pneumatic actuator is associated with at least one device, not illustrated, movable due to the action of the pneumatic actuator.

According to a possible embodiment, the apparatus 1 can be an apparatus for vulcanising green tyres comprising a vulcanisation mould. In this case, one or more devices can be provided from among the following:
a loader device relative to the vulcanisation mould;
an unloader device relative to the vulcanisation mould; grip members of a loader device and/or of an unloader device relative to the vulcanisation mould.

According to non-illustrated embodiments, the apparatus 1 can comprise at least two groups of pneumatic actuators 4, each comprising at least one pneumatic actuator arranged within the safety enclosure 2.

The apparatus 1 preferably comprises an electrical power supply (not illustrated) and a primary pneumatic supply 5 in connection with the pneumatic actuator 4. In the illustrated embodiment, the primary pneumatic supply 5 is in connection with the three pneumatic actuators 4. The primary pneumatic supply 5 and preferably also the electrical power supply can be activated for executing the building of at least one portion of a tyre in closed safety enclosure conditions.

Indicated with 6 is an auxiliary pneumatic supply arranged in connection with the pneumatic actuators 4 and suitable for executing an adjustment operation of the devices of the apparatus in open safety enclosure conditions. The auxiliary pneumatic supply 6 is arranged in connection with system air at an inlet 7.

Indicated with 8 is a main pneumatic selector adjustable for activating/deactivating the auxiliary pneumatic supply. In particular, the main pneumatic selector is a three-way, two-position mechanical valve. Preferably the main pneumatic selector is a valve with manual actuation.

Indicated with 9 is an operative pneumatic selector provided for each pneumatic actuator 4 or group of pneumatic actuators.

The operative pneumatic selector 9 is adjustable for selecting a corresponding connection between the pneumatic actuator and the auxiliary pneumatic supply. In particular the operative selector 9 is obtained by means of a five-way, three-position selector for reversing inlet/outlet of the pneumatic actuators and also providing a neutral discharge position. Preferably the operative pneumatic selector 9 is a valve with manual actuation valve. In the illustrated embodiment, three operative pneumatic selectors 9 are provided. Indicated with 10 is a secondary pneumatic selector provided for each inlet and/or outlet of the pneumatic actuator or group of pneumatic actuators. The secondary pneumatic selector is configured in a manner so as to alternately select between the primary pneumatic supply 5 and the auxiliary pneumatic supply 6 in the inlet and/or outlet of the pneumatic actuator. In the illustrated embodiment, six secondary pneumatic selectors 10 are provided.

According to the embodiment illustrated in the figure, each secondary pneumatic selector 10 is operatively connected to the main pneumatic selector 8. In particular, each secondary pneumatic selector 10 is controlled by a valve 11 as a function of the position assumed by the main pneumatic selector.

As illustrated in the enclosed figure, each secondary pneumatic selector 10 is arranged downstream of the respective operative pneumatic selector 9, considering a direction of access of the air from the inlet 7 to the pneumatic actuator 4.

Indicated with 12 is a piping of the auxiliary pneumatic supply arranged between the operative pneumatic selector 9 and the secondary pneumatic selector 10. Preferably the piping 12 comprises delivery piping and outlet piping which are functionally interchangeable. The piping 12 has a diameter smaller than piping 13 provided in the primary pneumatic supply 5.

Preferably the piping 12 has a diameter comprised between about 4 mm and about 6 mm.

Preferably the piping 13 has a diameter comprised between about 6 mm and about 12 mm.

According to the embodiment illustrated in the figure, the auxiliary pneumatic supply 6 comprises a flow adjuster 14 adapted for decreasing the pressure in the auxiliary pneumatic supply with respect to the pressure in the primary pneumatic supply and in the system.

Preferably, the pressure in the auxiliary pneumatic supply has a value comprised between about 3 bar and about 7 bar.

Preferably the pressure in the primary pneumatic supply has a value comprised between about 7 bar and about 8 bar.

According to the embodiment illustrated in the figure, the auxiliary pneumatic supply 6 comprises a manostat 15 for detecting the pressure within the auxiliary pneumatic supply.

A command box (not illustrated) contains the main pneumatic selector 8 and the operative pneumatic selectors 9. The command box is arranged within the safety enclosure, preferably arranged at a safety distance from the range of action of the devices of the apparatus.

During use, provision is made for closing the safety enclosure 2 in a manner so as to enable the activation at least of the primary pneumatic supply 5. Preferably the closure of the safety enclosure 2 also enables the activation of the electrical power supply. In other words, the closure of the safety enclosure is the condition required for being able to activate the primary pneumatic supply and preferably also the electrical power supply.

The primary pneumatic supply 5 of the pneumatic actuators is activated, preferably along with the electrical power supply.

At least one tyre building operation is executed in closed safety enclosure conditions by driving at least one of the pneumatic actuators by means of selection of a corresponding connection with the primary pneumatic supply 5, for example by selecting the position of primary operative pneumatic selectors 17.

If the apparatus 1 is an apparatus for vulcanising green tyres comprising a vulcanisation mould, the building operation comprises vulcanising a green tyre.

In order to execute, in open safety enclosure conditions, at least one adjustment operation on a device associated with a pneumatic actuator, the safety enclosure 2 is opened. The opening automatically deactivates the primary pneumatic supply 5 and preferably also the electrical power supply. Indeed the opening of the safety enclosure 2 corresponds with an automatic command for the deactivation of the primary pneumatic supply and preferably of the electrical power supply.

Then there is the activation of the auxiliary pneumatic supply, for example by modifying the position of the main pneumatic selector 8. The activation of the auxiliary pneumatic supply 6 is preferably manual. Preferably the opening of the safety enclosure is the condition for activating the auxiliary pneumatic supply. In particular, activating the auxiliary pneumatic supply comprises by-passing the primary pneumatic supply with the auxiliary pneumatic supply in the inlet and/or in the outlet of each pneumatic actuator 4 (or group of pneumatic actuators). Such by-pass is achieved downstream of a selection of the corresponding connection of the pneumatic actuator with the auxiliary pneumatic supply which will be described hereinbelow.

Preferably, in order to perform such by-pass, the position of the secondary pneumatic selectors 10 is modified in order to select between the primary pneumatic supply and the auxiliary pneumatic supply 6 in the inlet and/or outlet of each pneumatic actuator 4. In particular, the position of the secondary pneumatic selectors is modified as a function of the position of the main pneumatic selector 8, for example by means of actuation of the valve 11 that commands the secondary pneumatic selectors 10 following the modification of the position of the main selector 8.

Finally, there is the driving of the pneumatic actuator to be adjusted by selecting the corresponding connection with the auxiliary pneumatic supply 6, for example by modifying the position of a corresponding operative pneumatic selector 9. The selection of the connection with the auxiliary pneumatic supply 6 at the pneumatic actuator to be adjusted is preferably manual.

The pneumatic actuator to be adjusted is then supplied only by the auxiliary pneumatic supply and can be moved in a safe and reliable manner, without being affected by inertia and without requiring successive approximation attempts.

Preferably the activation of the auxiliary pneumatic supply 6 comprises the activation of an automatic command that prevents the execution of building operations in case of closure of the safety enclosure. In the case of the apparatus illustrated in the figure, proceed with detecting, e.g. by means of the manostat 15, the pressure inside the auxiliary pneumatic supply 6 in order to generate the automatic command that prevents the execution of building operations in closed safety enclosure conditions upon attaining a specific upper threshold value, indicative of the fact that an adjustment operation is underway.

Preferably provision is made for reducing the pressure of the auxiliary pneumatic supply 6, for example to about 3 bar, with respect to the primary pneumatic supply. With reference to the apparatus 1 illustrated in the enclosed figure, such decrease is obtained for example by means of the flow adjuster 14.

Preferably provision is made for reducing the flow rate of the auxiliary pneumatic supply 6 with respect to the primary pneumatic supply. With reference to the apparatus 1 illustrated in the enclosed figure, such decrease is obtained for example by the piping 12 of the auxiliary pneumatic supply, having diameter smaller than the piping 13 provided in the primary pneumatic supply 5.

At the end of the adjustment operation, it is possible to adjust other pneumatic actuators or groups of pneumatic actuators. In particular, if the apparatus comprises at least two groups of pneumatic actuators, each comprising at least one pneumatic actuator, proceed with selectively driving a group of pneumatic actuators by selecting a corresponding connection with the auxiliary pneumatic supply, for example by modifying the position del corresponding operative pneumatic selector 9. Preferably such selection is executed manually.

At the end of the adjustment operation for all the pneumatic actuators that required it, proceed with deactivating the auxiliary pneumatic supply, for example by modifying the position of the main pneumatic selector 8, in order to restore the building conditions of the tyre.

In particular, deactivating the auxiliary pneumatic supply comprises by-passing the auxiliary pneumatic supply 6 with the primary pneumatic supply in the inlet and/or in the outlet of each pneumatic actuator (or group of pneumatic actuators). Such by-pass is achieved downstream of the selection of the corresponding connection of the pneumatic actuator with the primary pneumatic supply achieved by means of the primary operative pneumatic selectors 17.

Preferably, in order to perform such by-pass, proceed with modifying the position of the secondary pneumatic selectors 10 in order to select between the primary pneumatic supply and the auxiliary pneumatic supply 6 in the inlet and/or outlet of each pneumatic actuator 4. In particular, the position of the secondary pneumatic selectors is modified as a function of the position of the main pneumatic selector 8.

Preferably, deactivating the auxiliary pneumatic supply 6 comprises the activation of an automatic command which enables the execution of building operations in closed safety enclosure conditions. In the case of the illustrated apparatus, proceed with detecting the pressure inside the auxiliary pneumatic supply in order to generate the automatic command which enables the execution of building operations in closed safety enclosure conditions upon attaining a specific lower threshold value, indicative of the fact that the adjustment operations have terminated.

The adjustment operation can comprise an operation for verifying or centring at least one device of the apparatus 1 driven by a pneumatic actuator.

In addition, the adjustment operation can be executed as a function of a defect of the tyre, detected and indicated in the course of a quality control.

If the apparatus 1 is an apparatus for vulcanising green tyres comprising a vulcanisation mould, the adjustment operation comprises one or more from among the following:
an operation of centring and/or concentricity of a loader device of a vulcanisation mould with respect to the vulcanisation mould;
an operation of centring and/or concentricity of an unloader device of a vulcanisation mould with respect to the vulcanisation mould;
an operation for verifying the pressure exerted by grip members of a loader device and/or of an unloader device of a vulcanisation mould.

## Claims

1. A method for managing at least one adjustment operation on an apparatus (1) for building a tyre, said apparatus (1) being arranged within a safety enclosure (2) and comprising at least one pneumatic actuator (4), said method comprising:
executing at least one building operation in closed safety enclosure conditions, comprising activating at least one primary pneumatic supply (5) of said pneumatic actuator (4) and driving said at least one pneumatic actuator (4) by selecting a corresponding connection with said primary pneumatic supply (5), **characterized by** executing at least one adjustment operation of said apparatus (1) in open safety enclosure conditions, comprising activating an auxiliary pneumatic supply (6) of said pneumatic actuator (4),
wherein the closure of the safety enclosure (2) is the condition required for being able to activate said primary pneumatic supply (5), and wherein the opening of the safety enclosure (2) corresponds with an automatic command for the deactivation of said primary pneumatic supply (5).

2. A method for managing at least one adjustment operation as claimed in claim 1, said apparatus comprising at least two groups of pneumatic actuators, each comprising at least one pneumatic actuator, wherein executing at least one adjustment operation of said apparatus (1) in open safety enclosure conditions comprises selectively driving a group of pneumatic actuators (4) by means of a corresponding connection with said auxiliary pneumatic supply (6).

3. A method for managing at least one adjustment operation as claimed in claim 1, wherein activating said auxiliary pneumatic supply (6) comprises the activation of an automatic command that prevents the execution of said at least one building operation in case of closure of the safety enclosure (2).

4. A method for managing at least one adjustment operation as claimed in claim 1, wherein activating said auxiliary pneumatic supply (6) comprises by-passing said primary pneumatic supply (5) with said auxiliary pneumatic supply (6) in the inlet (4a) and/or in the outlet (4b) of each pneumatic actuator (4) or group of pneumatic actuators.

5. A method for managing at least one adjustment operation as claimed in claim 1, comprising reducing the pressure of said auxiliary pneumatic supply (6) with respect to said primary pneumatic supply (5).

6. A method for managing at least one building operation of a tyre as claimed in claim 1, comprising reducing the flow rate of said auxiliary pneumatic supply (6) with respect to said primary pneumatic supply (5).

7. A method for managing at least one adjustment operation as claimed in claim 1, wherein said adjustment operation comprises an operation for verifying or centring at least one device of said apparatus (1) driven by a pneumatic actuator (4).

8. A method for managing at least one adjustment operation as claimed in claim 1, comprising detecting and signalling a defect of said tyre and performing said adjustment operation as a function of the indicated defect.

9. A method for managing at least one adjustment operation as claimed in claim 1, wherein executing at least one adjustment operation of said apparatus in open safety enclosure conditions comprises manually activating an auxiliary pneumatic supply of said pneumatic actuator.

10. A method for managing at least one adjustment operation as claimed in claim 1, wherein executing at least one building operation in closed safety enclosure conditions comprises activating at least one electrical power supply,
wherein the closure of the safety enclosure (2) is the condition required for being able to activate said electrical power supply, and wherein the opening of the safety enclosure (2) corresponds with an automatic command for the deactivation of said electrical power supply.

11. A work station (1a) comprising:
a safety enclosure (2),
an apparatus for building a tyre arranged within said safety enclosure (2) and comprising at least one pneumatic actuator (4),
said work station (1a) comprising a primary pneumatic supply (5) of said pneumatic actuator (4) that can be activated for executing at least the building of a portion of a tyre in closed safety enclosure conditions, said work station being **characterized by** further comprising an auxiliary pneumatic supply (6) of said pneumatic actuators (4) suitable for executing an adjustment operation in open safety enclosure conditions,
a main pneumatic selector (8) operatively associated with said safety enclosure, adjustable for activating/deactivating said auxiliary pneumatic supply (6) respectively with safety enclosure open and with safety enclosure closed.

12. A work station (1a) as claimed in claim 11, comprising at least two groups of pneumatic actuators (4), each comprising at least one pneumatic actuator (4), and an operative pneumatic selector (9) for each group of pneumatic actuators, said operative pneumatic selector (9) being adjustable for selecting a corresponding connection with said auxiliary pneumatic supply (6).

13. A work station (1a) as claimed in claim 11, comprising a secondary pneumatic selector (10) for each inlet (4a) and/or outlet (4b) of the pneumatic actuator (4) or group of pneumatic actuators for alternately selecting between said primary pneumatic supply (5) and said auxiliary pneumatic supply (6) in the inlet (4a) and/or outlet (4b) of said pneumatic actuator (4).

14. A work station (1a) as claimed in claim 11, wherein said auxiliary pneumatic supply (6) comprises a flow adjuster (14) adapted for decreasing the pressure in the auxiliary pneumatic supply (6) with respect to the pressure in the primary pneumatic supply (5).

15. A work station (1a) as claimed in claim 11, wherein said auxiliary pneumatic supply (6) comprises a manostat (15) for detecting the pressure inside the auxiliary pneumatic supply (6).

## Patentansprüche

1. Verfahren zur Verwaltung zumindest einer Einstelloperation an einer Vorrichtung (1) zur Herstellung eines Reifens, wobei die Vorrichtung (1) innerhalb einer Sicherheitseinhausung (2) angeordnet ist und zumindest ein Pneumatikstellglied (4) umfasst, wobei das Verfahren umfasst:
Ausführen zumindest einer Herstellungsoperation in geschlossenen Sicherheitseinhausungsbedingungen, umfassend das Aktivieren zumindest einer primären Pneumatikzufuhr (5) des Pneumatikstellglieds (4) und Antreiben des zumindest einen Pneumatikstellglieds (4) durch Auswählen einer entsprechenden Verbindung mit der primären Pneumatikzufuhr (5),
**gekennzeichnet durch**
Ausführen zumindest einer Einstelloperation der Vorrichtung (1) in geöffneten Sicherheitseinhausungsbedingungen, umfassend das Aktivieren einer zusätzlichen Pneumatikzufuhr (6) des Pneumatikstellglieds (4),
wobei das Schließen der Sicherheitseinhausung (2) die Bedingung ist, die erforderlich ist, um die primäre Pneumatikzufuhr (5) aktivieren zu können, und wobei das Öffnen der Sicherheitseinhausung (2) einem automatischen Befehl zur Deaktivierung der primären Pneumatikzufuhr (5) entspricht.

2. Verfahren zur Verwaltung zumindest einer Einstelloperation nach Anspruch 1, wobei die Vorrichtung Folgendes umfasst: zumindest zwei Gruppen von Pneumatikstellgliedern, die jeweils zumindest ein Pneumatikstellglied umfassen, wobei das Ausführen zumindest einer Einstelloperation der Vorrichtung (1) in offenen Sicherheitseinhausungsbedingungen das selektive Antreiben einer Gruppe von Pneumatikstellgliedern (4) mittels einer entsprechenden Verbindung mit der zusätzlichen Pneumatikzufuhr (6) umfasst.

3. Verfahren zur Verwaltung zumindest einer Einstelloperation nach Anspruch 1, wobei das Aktivieren der zusätzlichen Pneumatikzufuhr (6) das Aktivieren eines automatischen Befehls umfasst, der die Ausführung der zumindest einen Herstellungsoperation im Fall des Schließens der Sicherheitseinhausung (2) verhindert.

4. Verfahren zur Verwaltung zumindest einer Einstelloperation nach Anspruch 1, wobei das Aktivieren der zusätzlichen Pneumatikzufuhr (6) das Umgehen der primären Pneumatikzufuhr (5) mit der zusätzlichen Pneumatikzufuhr (6) in dem Einlass (4a) und/oder in dem Auslass (4b) eines jeden Pneumatikstellglieds (4) oder jeder Gruppe von Pneumatikstellgliedern umfasst.

5. Verfahren zur Verwaltung zumindest einer Einstelloperation nach Anspruch 1, umfassend das Verringern des Drucks der zusätzlichen Pneumatikzufuhr (6) relativ zu der primären Pneumatikzufuhr (5).

6. Verfahren zur Verwaltung zumindest einer Herstellungsoperation für einen Reifen nach Anspruch 1, umfassend das Verringern der Strömungsrate der zusätzlichen Pneumatikzufuhr (6) relativ zu der primären Pneumatikzufuhr (5).

7. Verfahren zur Verwaltung zumindest einer Einstelloperation nach Anspruch 1, wobei die Einstelloperation eine Operation zur Verifizierung oder Zentrierung zumindest einer Einrichtung der Vorrichtung (1) umfasst, die durch ein Pneumatikstellglied (4) angetrieben wird.

8. Verfahren zur Verwaltung zumindest einer Einstelloperation nach Anspruch 1, umfassend das Erfassen und Signalisieren eines Defekts des Reifens und das Durchführen der Einstelloperation als eine Funktion des angezeigten Defekts.

9. Verfahren zur Verwaltung zumindest einer Einstelloperation nach Anspruch 1, wobei das Durchführen zumindest einer Einstelloperation der Vorrichtung unter offenen Sicherheitseinhausungsbedingungen das manuelle Aktivieren einer zusätzlichen Pneumatikzufuhr des Pneumatikstellglieds umfasst.

10. Verfahren zur Verwaltung zumindest einer Einstelloperation nach Anspruch 1, wobei das Durchführen zumindest einer Herstellungsoperation unter geschlossenen Sicherheitseinhausungsbedingungen das Aktivieren zumindest einer elektrischen Leistungsversorgung umfasst,
wobei das Schließen der Sicherheitseinhausung (2) die Bedingung ist, die erforderlich ist, um die elektrische Leistungsversorgung aktivieren zu können, und wobei das Öffnen der Sicherheitseinhausung (2) einem automatischen Befehl zur Deaktivierung der elektrischen Leistungsversorgung entspricht.

11. Arbeitsstation (1a) umfassend:
eine Sicherheitseinhausung (2),
eine Vorrichtung zur Herstellung eines Reifens, die innerhalb der Sicherheitseinhausung (2) angeordnet ist und zumindest ein Pneumatikstellglied (4) umfasst,
wobei die Arbeitsstation (1a) eine primäre Pneumatikzufuhr (5) des Pneumatikstellglieds (4) umfasst, die aktiviert werden kann, um zumindest die Herstellung eines Abschnitts eines Reifens unter geschlossenen Sicherheitseinhausungsbedingungen auszuführen,
wobei die Arbeitsstation **dadurch gekennzeichnet ist, dass** sie ferner eine zusätzliche Pneumatikzufuhr (6) der Pneumatikstellglieder (4) umfasst, die zur Durchführung einer Einstelloperation unter offenen Sicherheitseinhausungsbedingungen geeignet ist,
eine Hauptpneumatikauswahlvorrichtung (8), die operativ der Sicherheitseinhausung zugeordnet ist, und einstellbar ist, um die zusätzliche Pneumatikzufuhr (6) jeweils zu aktivieren/deaktivieren, wenn die Sicherheitseinhausung geöffnet bzw. die Sicherheitseinhausung geschlossen ist.

12. Arbeitsstation (1a) nach Anspruch 11, umfassend zumindest zwei Gruppen von Pneumatikstellgliedern (4), die jeweils zumindest ein Pneumatikstellglied (4) umfassen, und eine operative Pneumatikauswahlvorrichtung (9) für jede Gruppe von Pneumatikstellgliedern, wobei die operative Pneumatikauswahlvorrichtung (9) einstellbar ist, um eine entsprechende Verbindung mit der zusätzlichen Pneumatikzufuhr (6) auszuwählen.

13. Arbeitsstation (1a) nach Anspruch 11, umfassend eine sekundäre Pneumatikauswahlvorrichtung (10) für jeden Einlass (4a) und/oder Auslass (4b) des Pneumatikstellglieds (4) oder der Gruppe von Pneumatikstellgliedern, um wechselweise zwischen der primären Pneumatikzufuhr (5) und der zusätzlichen Pneumatikzufuhr (6) in dem Einlass (4a) und/oder Auslass (4b) des Pneumatikstellglieds (4) auszuwählen.

14. Arbeitsstation (1a) nach Anspruch 11, wobei die zusätzlichen Pneumatikzufuhr (6) einen Strömungseinsteller (14) umfasst, der dazu ausgestaltet ist, den Druck in der zusätzlichen Pneumatikzufuhr (6) relativ zu dem Druck in der primären Pneumatikzufuhr (5) zu verringern.

15. Arbeitsstation (1a) nach Anspruch 11, wobei die zusätzliche Pneumatikzufuhr (9) einen Manostat (15) umfasst, um den Druck im Inneren der zusätzlichen Pneumatikzufuhr (6) zu erfassen.

## Revendications

1. Procédé de gestion d'au moins une opération de réglage sur un appareil (1) pour construire un pneu, ledit appareil (1) étant agencé à l'intérieur d'une enceinte de sécurité (2) et comprenant au moins un actionneur pneumatique (4), ledit procédé comprenant :
l'exécution d'au moins une opération de construction dans des conditions où l'enceinte de sécurité est fermée, comprenant l'activation d'au moins une alimentation pneumatique primaire (5) dudit actionneur pneumatique (4) et l'entraînement dudit au moins un actionneur pneumatique (4) par sélection d'un raccordement correspondant avec ladite alimentation pneumatique primaire (5),
**caractérisé par**
l'exécution d'au moins une opération de réglage dudit appareil (1) dans des conditions où l'enceinte de sécurité est ouverte, comprenant l'activation d'une alimentation pneumatique auxiliaire (6) dudit actionneur pneumatique (4),
où la fermeture de l'enceinte de sécurité (2) est la condition requise pour pouvoir activer ladite alimentation pneumatique primaire (5), et où l'ouverture de l'enceinte de sécurité (2) correspond à une commande automatique pour la désactivation de ladite alimentation pneumatique primaire (5).

2. Procédé de gestion d'au moins une opération de réglage tel que revendiqué dans la revendication 1, ledit appareil comprenant au moins deux groupes d'actionneurs pneumatiques, comprenant chacun au moins un actionneur pneumatique, où l'exécution d'au moins une opération de réglage dudit appareil (1) dans des conditions où l'enceinte de sécurité est ouverte comprend l'entraînement sélectif d'un groupe d'actionneurs pneumatiques (4) au moyen d'un raccordement correspondant avec ladite alimentation pneumatique auxiliaire (6).

3. Procédé de gestion d'au moins une opération de réglage tel que revendiqué dans la revendication 1, dans lequel l'activation de ladite alimentation pneumatique auxiliaire (6) comprend l'activation d'une commande automatique qui empêche l'exécution de ladite au moins une opération de construction en cas de fermeture de l'enceinte de sécurité (2).

4. Procédé de gestion d'au moins une opération de réglage tel que revendiqué dans la revendication 1, dans lequel l'activation de ladite alimentation pneumatique auxiliaire (6) comprend le contournement de ladite alimentation pneumatique primaire (5) par ladite alimentation pneumatique auxiliaire (6) dans l'entrée (4a) et/ou dans la sortie (4b) de chaque actionneur pneumatique (4) ou groupe d'actionneurs pneumatiques.

5. Procédé de gestion d'au moins une opération de réglage tel que revendiqué dans la revendication 1, comprenant la réduction de la pression de ladite alimentation pneumatique auxiliaire (6) par rapport à ladite alimentation pneumatique primaire (5).

6. Procédé de gestion d'au moins une opération de construction d'un pneu tel que revendiqué dans la revendication 1, comprenant la réduction du débit de ladite alimentation pneumatique auxiliaire (6) par rapport à ladite alimentation pneumatique primaire (5).

7. Procédé de gestion d'au moins une opération de réglage tel que revendiqué dans la revendication 1, dans lequel ladite opération de réglage comprend une opération de vérification ou de centrage d'au moins un dispositif dudit appareil (1) entraîné par un actionneur pneumatique (4).

8. Procédé de gestion d'au moins une opération de réglage tel que revendiqué dans la revendication 1, comprenant la détection et la signalisation d'un défaut dudit pneu et la réalisation de ladite opération de réglage en fonction du défaut indiqué.

9. Procédé de gestion d'au moins une opération de réglage tel que revendiqué dans la revendication 1, dans lequel l'exécution d'au moins une opération de réglage dudit appareil dans des conditions où l'enceinte de sécurité est ouverte comprend l'activation manuelle d'une alimentation pneumatique auxiliaire dudit actionneur pneumatique.

10. Procédé de gestion d'au moins une opération de réglage tel que revendiqué dans la revendication 1, dans lequel l'exécution d'au moins une opération de construction dans des conditions où l'enceinte de sécurité est fermée comprend l'activation d'au moins une alimentation électrique,
où la fermeture de l'enceinte de sécurité (2) est la condition requise pour pouvoir activer ladite alimentation électrique, et où l'ouverture de l'enceinte de sécurité (2) correspond à une commande automatique pour la désactivation de ladite alimentation électrique.

11. Station de travail (1a) comprenant :
une enceinte de sécurité (2),
un appareil pour construire un pneu agencé à l'intérieur de ladite enceinte de sécurité (2) et comprenant au moins un actionneur pneumatique (4),
ladite station de travail (1a) comprenant une alimentation pneumatique primaire (5) dudit actionneur pneumatique (4) qui peut être activée pour exécuter au moins la construction d'une partie d'un pneu dans des conditions où l'enceinte de sécurité est fermée,
ladite station de travail étant **caractérisée en ce qu'**elle comprend en outre
une alimentation pneumatique auxiliaire (6) desdits actionneurs pneumatiques (4) appropriée pour exécuter une opération de réglage dans des conditions où l'enceinte de sécurité est ouverte,
un sélecteur pneumatique principal (8) associé de manière fonctionnelle à ladite enceinte de sécurité, réglable pour activer/désactiver ladite alimentation pneumatique auxiliaire (6) respectivement avec une enceinte de sécurité ouverte et avec une enceinte de sécurité fermée.

12. Station de travail (1a) telle que revendiquée dans la revendication 11, comprenant au moins deux groupes d'actionneurs pneumatiques (4), comprenant chacun au moins un actionneur pneumatique (4), et un sélecteur pneumatique opérationnel (9) pour chaque groupe d'actionneurs pneumatiques, ledit sélecteur pneumatique opérationnel (9) étant réglable pour sélectionner un raccordement correspondant avec ladite alimentation pneumatique auxiliaire (6).

13. Station de travail (1a) telle que revendiquée dans la revendication 11, comprenant un sélecteur pneumatique secondaire (10) pour chaque entrée (4a) et/ou sortie (4b) de l'actionneur pneumatique (4) ou du groupe d'actionneurs pneumatiques pour une sélection alternée entre ladite alimentation pneumatique primaire (5) et ladite alimentation pneumatique auxiliaire (6) dans l'entrée (4a) et/ou la sortie (4b) dudit actionneur pneumatique (4).

14. Station de travail (1a) telle que revendiquée dans la revendication 11, dans laquelle ladite alimentation pneumatique auxiliaire (6) comprend un régulateur de débit (14) adapté pour diminuer la pression dans l'alimentation pneumatique auxiliaire (6) par rapport à la pression dans l'alimentation pneumatique primaire (5).

15. Station de travail (1a) telle que revendiquée dans la revendication 11, dans laquelle ladite alimentation pneumatique auxiliaire (6) comprend un manostat (15) pour détecter la pression à l'intérieur de l'alimentation pneumatique auxiliaire (6).
